# EUROPÄISCHE PATENTSCHRIFT

(11) **EP 3 036 885 B1**
(45) Veröffentlichungstag und Bekanntmachung des Hinweises auf die Patenterteilung: **24.07.2019**
(21) Anmeldenummer: 14755080.0
(22) Anmeldetag: 22.08.2014
(51) Int. Cl.: H04L 29/08, H04L 29/06

(54) **ITERATIVE DATENPAKETERZEUGUNG IM CAR2X-NETZWERK**
ITERATIVE DATA PACKET GENERATION IN THE CAR2X NETWORK
GÉNÉRATION ITÉRATIVE DE PAQUETS DE DONNÉES DANS UN RÉSEAU CAR2X

(30) Priorität: 22.08.2013 DE 102013216625
(43) Veröffentlichungstag der Anmeldung: 29.06.2016
(73) Patentinhaber: Continental Teves AG & Co. OHG, 60488 Frankfurt am Main (DE)
(72) Erfinder: GROTENDORST, Thomas, 65760 Eschborn (DE); MENZEL, Marc, 35096 Weimar (Lahn) (DE); SCHERPING, Richard, 65835 Liederbach am Taunus (DE); STÄHLIN, Ulrich, 65760 Eschborn (DE)
(86) Internationale Anmeldenummer: PCT/EP2014/067943
(87) Internationale Veröffentlichungsnummer: WO 2015/025050

(56) Entgegenhaltungen:
- EP-A1- 2 296 318
- WO-A1-2013/102575
- US-A1- 2006 161 684
- MIGUEL SEPULCRE ET AL: "Congestion and Awareness Control in Cooperative Vehicular Systems", PROCEEDINGS OF THE IEEE, IEEE. NEW YORK, US, Bd. 99, Nr. 7, 1. Juli 2011 (2011-07-01), Seiten 1260-1279, XP011367584, ISSN: 0018-9219, DOI: 10.1109/JPROC.2011.2116751

## Beschreibung

Die Erfindung betrifft ein Verfahren zum Erzeugen eines in einem Fahrzeug-Ad-hoc-Netzwerk zu übertragenen Datenpaketes mit einer in dem Fahrzeug-Ad-hoc-Netzwerk zu übertragenen Nachricht, eine Vorrichtung zur Durchführung des Verfahrens und einen Sender mit der Vorrichtung.

In der EP 2 296 318 A1 ist ein Verfahren zur Übertragung auf einer Bitübertragungsschicht (physical layer) eines auf Paketvermittlung basierenden Netzwerks beschrieben. Dieses sieht eine Paketvorlage mit mehreren Datenfeldern vor, in der ein Großteil der Paketnutzlast definiert ist, wobei zur Bildung eines zu versendenden vollständigen Pakets einzelne Datenfelder der Paketvorlage aktualisiert werden.

Aus der WO 2010 / 139 526 A1 ist ein Car2X genanntes mobiles Ad-hoc-Netz bekannt, dessen Knoten bestimmte Straßenverkehrsteilnehmer wie Fahrzeuge oder andere Objekte im Straßenverkehr, wie Ampeln sind. Über diese Netzwerke können den am Car2X-Netzwerk beteiligten Straßenverkehrsteilnehmern Hinweise über Straßenverkehrszustände, wie Unfälle, Staus, Gefahrensituationen, ... bereitgestellt werden.

In der WO 2013/102575 A1 ist ein Verfahren zur Erkennung redundant empfangener Informationen beschrieben, welches eine unnötig redundante Verarbeitung von mittels Fahrzeug-zu-X-Kommunikation redundant empfangener Informationen vermeiden hilft. Dabei werden empfangene Informationen vor einer Verarbeitung in eine Informationstabelle eingetragen und untereinander abgeglichen.

Es ist Aufgabe die Effizienz vorhandener Ressourcen mobiler Ad-hoc-Netze zu verbessern.

Die Aufgabe wird durch die Merkmale der unabhängigen Ansprüche gelöst. Bevorzugte Weiterbildungen sind Gegenstand der abhängigen Ansprüche.

Dem angegebenen Verfahren liegt die Überlegung zugrunde, dass die in dem Fahrzeug-Ad-Hoc-Netzwerk zu übertragene Nachricht in dem Datenpaket verpackt wird, um deren Austausch im Fahrzeug-Ad-Hoc-Netzwerk mit anderen Teilnehmern robust mit implementierungsunabhängigen Datenstrukturen durchzuführen. Die Erzeugung eines Datenpaketes aus einer zu versendenden Nachricht ist in der Regel jedoch rechenaufwändig, was die Bereitstellung entsprechender Rechenressourcen notwendig macht.

Im Rahmen des angegebenen Verfahrens wird jedoch erkannt, dass sich viele aufeinanderfolgende, von einem einzelnen Teilnehmer des Fahrzeug-Ad-Hoc-Netzwerkes versendete Nachrichten in ihrem Informationsinhalt ähneln, weil sich viele Informationen, wie beispielsweise die Versionsnummer des verwendeten Protokolls oder Angaben zum Fahrzeugtyp prinzipbedingt nicht ändern. Ist der Teilnehmer beispielsweise ein Fahrzeug, das mit einer konstanten Geschwindigkeit auf einer immer geradeaus führenden Straße fährt, so bleiben weitere Informationen, wie das Heading oder die Geschwindigkeit ebenfalls konstant. Wenn all diese Informationen in einer Nachricht in regelmäßigen Abständen übertragen werden, um die sich ständig ändernden Teilnehmer des Fahrzeug-Ad-Hoc-Netzwerkes auf die eigene Existenz aufmerksam zu machen, müssen all diese Informationen bei der Erzeugung eines Datenpaketes in eigentlich redundanter Weise immer wieder neu in die Datenstruktur des zu erstellenden Datenpaketes gewandelt werden.

Hier setzt das angegebene Verfahren mit der Überlegung an, nicht das gesamte Datenpaket neu zu erstellen, sondern in einem bereits vorhandenen Datenpaket nur die Abschnitte zu ändern, in denen sich tatsächlich Informationen geändert haben. Dies ist auf den ersten Blick hinsichtlich der Intention, die bereitzustellenden Rechenressourcen zu reduzieren, kontraproduktiv, denn das Analysieren eines vorhandenen Datenpaketes und das Vergleichen mit einem neu zu kodierenden Datenpaket nimmt seinerseits ebenfalls einen nicht zu unterschätzenden Rechenaufwand in Anspruch. Hier kommt aber die zuvor genannte Erkenntnis zum Tragen, dass in einem Fahrzeug-Ad-Hoc-Netzwerk prinzipbedingt eine Menge Datenpakete versendet werden müssen, die sich alle inhaltlich ähnlich sind, weil die grundlegende zu übertragende Information - das heißt auf die eigene Existenz aufmerksam zu machen - konstant bleibt, sich aber die Teilnehmer ständig ändern, die mit dieser Information informiert werden sollen. Deshalb wirkt das angegebene Verfahren insbesondere in einem Fahrzeug-Ad-Hoc-Netzwerk in besonderer Weise rechenressourcensparend und hilft auch, Datenpakete schneller zu erstellen. Für typische Änderungsvorgänge könnte die Bestimmung der Unterschiede zwischen der zu packenden Nachricht und der bereits gepackten Nachricht auch im Vorfeld offline bestimmt werden, damit im Betrieb des angegebenen Verfahrens ein entsprechend notwendiger Vergleichsschritt ebenfalls entfallen kann.

In einer Weiterbildung des angegebenen Verfahrens enthalten die gepackte Nachricht und die zu übertragende Nachricht zur Qualifizierung von Informationen Informationsvariablen, die im Datenpaket in einer vorbestimmten Struktur angeordnet sind und die die Informationen mit Informationswerten qualifizieren. Das heißt, dass das Datenpaket selbst eine vorbestimmte Datenstruktur aufweist, in der die Informationen im Datenpaket zusammengesetzt werden müssen. Diese Datenstruktur ist definiert und ändert sich daher nicht. Der Vorteil an dieser Datenstruktur ist, dass die Positionen der mit der zu übertragenden Nachricht zu versendenden Informationen vorab bekannt ist, und dass die Manipulationen am bereits vorhandenen Datenpaket zum Einbau der aktualisierten zu versendenden Information gezielt an vorbestimmten Stellen in dieser Datenstruktur durchgeführt werden können, ohne dass das bereits vorhandene Datenpaket selbst vollständig entschlüsselt werden muss. Daher sollte der auszutauschende Abschnitt in dem bereits vorhandenen Datenpaket Informationsvariablen umfassen, an denen sich die Informationswerte der zu übertragenden Nachricht mit den Informationswerten der bereits gepackten Nachricht unterscheiden. Dann können bei der Erstellung des neuen Datenpaketes in dem bereits vorhandenen Datenpaket die Informationswerte aktualisiert werden, an denen sich die zu übertragende Nachricht von der bereit gepackten Nachricht unterscheiden.

In einer zusätzlichen Weiterbildung umfasst das angegebene Verfahren den Schritt Austauschen des bestimmten Abschnittes in dem vorhandenen Datenpaketes basierend auf den Informationswerten der zu übertragenden Nachricht der Informationsvariablen in dem auszutauschenden Abschnitt. Auf diese Weise können die Informationswerte in einfacher Weise aktualisiert werden.

Dabei können die Informationswerte der zu übertragenden Nachricht der Informationsvariablen in dem auszutauschenden Abschnitt in einer besonderen Weiterbildung des angegebenen Verfahrens zum Austauschen des bestimmten Abschnittes in dem vorhandenen Datenpaket basierend auf einer vorbestimmten Vorschrift kodiert werden. Die Kodierung kann dabei durchgeführt werden, um die Anzahl der zur Übertragung des Informationswertes notwendigen Bytes zu reduzieren und um einen implementierungsunabhängigen Standard zu erreichen..

Erfindungsgemäß wird der bestimmte Abschnitt in dem vorhandenen Datenpaket nur ausgetauscht, wenn der vorbestimmte Abschnitt eine vorbestimmte Bedingung erfüllt. Auf diese Weise kann der obigen Erkenntnis Rechnung getragen werden, dass sich die iterative Erzeugung eines Datenpaketes basierend auf einem bereits vorhandenen Datenpaket nur dann lohnt, wenn die Informationen zwischen beiden Datenpaketen größtenteils redundant und damit die Anzahl der durchzuführenden Änderungen vergleichsweise gering sind. Dies sollte mit der vorbestimmten Bedingung festgelegt werden, um einen unbeabsichtigten Anstieg der notwendigen Rechenressourcen über den Fall, dass das zu versendende Datenpaket vollständig aus der zu versendenden Nachricht erstellt wird, zu vermeiden.

In einer bevorzugten Weiterbildung des angegebenen Verfahrens kann die vorbestimmte Bedingung von der mit der Informationsvariablen qualifizierten Information abhängig sein. Dieser Weiterbildung liegt die Überlegung zugrunde, dass bestimmte Änderungen in der zu versendenden Nachricht gegenüber der Nachricht, die im bereits vorhandenen Datenpaket gepackt ist, auf grundlegende Änderungen hindeuten, die auf eine entsprechend niedrige Redundanz zwischen beiden Nachrichten hindeuten. Auf eine derartige Änderung könnte beispielsweise eine Änderung in der oben genannten Versionsnummer des verwendeten Protokolls hindeuten.

Erfindungsgemäß umfasst das angegebene Verfahren den Schritt Packen der gesamten zu übertragenden Nachricht zum zu übertragenden Datenpacket, wenn der vorbestimmte Abschnitt die vorbestimmte Bedingung nicht erfüllt.

Gemäß einem weiteren Aspekt der Erfindung ist eine Vorrichtung eingerichtet, ein Verfahren nach einem der vorstehenden Ansprüche durchzuführen.

Gemäß einem weiteren Aspekt der Erfindung umfasst ein Sender für ein Fahrzeug zum Senden eines Übertragungssignals, das eingerichtet ist Nachrichten mit Positionsdaten zu Teilnehmern eines Fahrzeug-Ad-Hoc-Netzwerkes in Datenpaketen zu tragen:
- eine der angegebenen Vorrichtungen zum Erzeugen wenigstens eines Datenpaketes aus einer zu versendenden Nachricht,
- eine Übertragungseinrichtung zum Versenden des Datenpaketes in dem Übertragungssignal über eine Antenne.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 eine Prinzipdarstellung eines auf einer Straße fahrenden Fahrzeuges,
Fig. 2 eine Prinzipdarstellung des Fahrzeuges der Fig. 1,
Fig. 3 eine Prinzipdarstellung eines Fahrzeug-Ad-Hoc-Netzwerkes für das Fahrzeug der Fig. 1 und 2,
Fig. 4 eine Prinzipdarstellung einer Übertragungssituation in dem Fahrzeug-Ad-Hoc-Netzwerk der Fig. 3, und
Fig. 5 eine Prinzipdarstellung einer Datenpaketerzeugungseinrichtung in dem Fahrzeug der Fig. 1 und 2 zeigen.

In den Figuren werden gleiche technische Elemente mit gleichen Bezugszeichen versehen und nur einmal beschrieben.

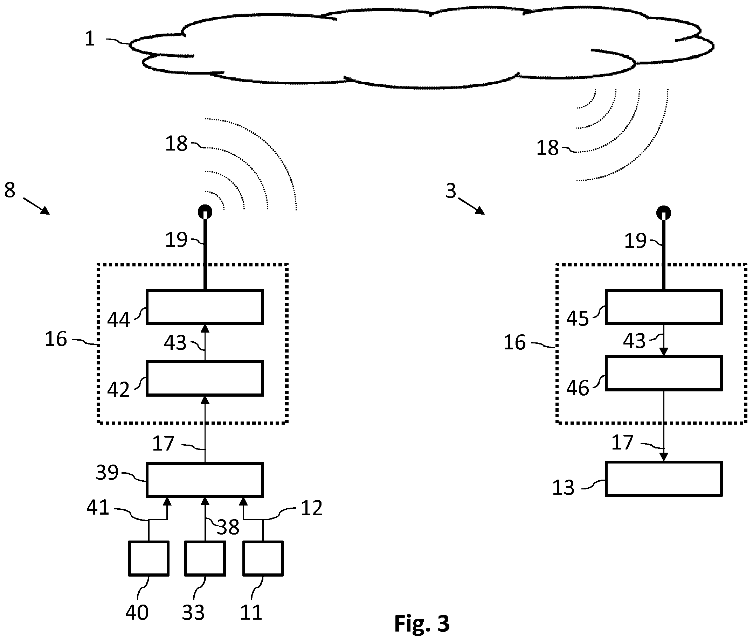

Die Erfindung betrifft ein Netzwerkprotokoll für ein in Fig. 3 gezeigtes Fahrzeug-Ad-Hoc-Netzwerk, das nachstehend der Einfachheit halber Car2X-Netzwerk 1 genannt wird. Zur besseren Verständlichkeit des technischen Hintergrundes zu diesem Car2X-Netzwerk 1 soll zunächst ein nicht einschränkendes Anwendungsbeispiel zu diesem Car2X-Netzwerk 1 gegeben werden, bevor auf technische Einzelheiten zu diesem näher eingegangen wird.

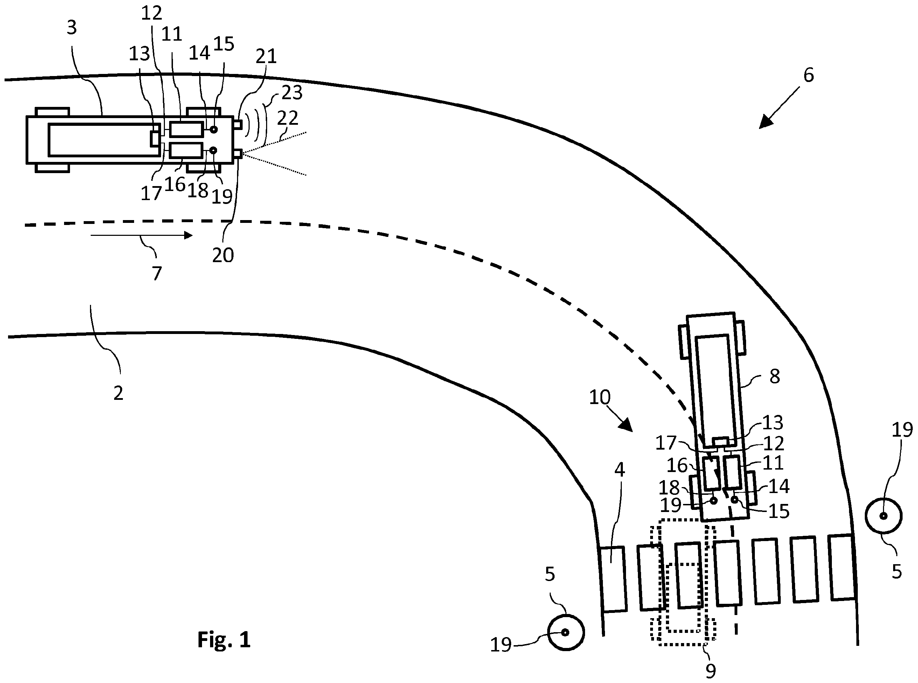

Es wird daher auf Fig. 1 Bezug genommen, die eine Prinzipdarstellung eines auf einer Straße 2 fahrenden Fahrzeuges 3 zeigt.

In der vorliegenden Ausführung soll sich auf der Straße 2 eine Fußgängerüberführung 4 befinden, an der mittels einer Ampel 5 geregelt wird, ob das Fahrzeug 4 auf der Straße 2 die Fußgängerüberführung 4 überqueren darf oder ein nicht weiter dargestellter Fußgänger auf der Fußgängerüberführung 4 die Straße 2. Zwischen der Fußgängerüberführung 4 und der Ampel 5 befindet sich im Rahmen der vorliegenden Ausführung ein Hindernis in Form einer Kurve 9, die die Fußgängerüberführung 4 dem Fahrer des Fahrzeuges 3 sowie einer noch zu beschreibenden Umfeldsensorik des Fahrzeuges 3 gegenüber verdeckt.

In einer Fahrtrichtung 7 vor dem Fahrzeug 3 ist in Fig. 1 ein weiteres Fahrzeug 8 dargestellt, das mit einem gepunktet dargestellten Fahrzeug 9 auf der Fußgängerüberführung 4 in einen Verkehrsunfall 10 verwickelt ist und die Fahrspur in Fahrtrichtung 7 des Fahrzeuges 3 blockiert.

Die Fußgängerüberführung 4 und der Verkehrsunfall 10 stellen Gefahrensituationen auf der Straße 2 dar. Übersieht der Fahrer des Fahrzeuges 3 die Fußgängerüberführung 4 und hält vor dieser damit regelwidrig nicht an, so könnte er einen die Fußgängerüberführung 4 überquerenden Fußgänger erfassen, der beim Überqueren der Fußgängerüberführung 4 auf das regelkonforme Verhalten des Fahrers des Fahrzeuges 3 vertraut. In beiden Gefahrensituationen muss der Fahrer des Fahrzeuges 3 das Fahrzeug 3 anhalten, um eine Kollision mit dem Gefahrenobjekt in der Gefahrensituation, also dem Fußgänger und/oder dem weiteren Fahrzeug 8 zu vermeiden. Hierzu kann das Car2X-Netzwerk 1 verwendet werden, worauf an späterer Stelle näher eingegangen wird.

Das Fahrzeug 3 weist in der vorliegenden Ausführung einen Empfänger 11 für ein globales Satellitennavigationssystem, nachstehend GNSS-Empfänger 11 genannt auf, über den das Fahrzeug 3 in einer an sich bekannten Weise Positionsdaten in Form seiner absoluten geographischen Lage 12 bestimmen und beispielsweise im Rahmen eines Navigationssystems 13 nutzen kann, um diese auf einer nicht weiter dargestellten geographischen Karten anzuzeigen. Entsprechende Signale 14 des Globalen Satellitennavigationssystems, nachstehend GNSS-Signale 14 genannt, können beispielsweise über eine entsprechende GNSS-Antenne 15 empfangen und in an sich bekannter Weise an den GNSS-Empfänger 11 weitergeleitet werden.

Das Fahrzeug weist in der vorliegenden Ausführung ferner einen Transceiver 16 auf, über den das Fahrzeug 3 als Knoten am Car2X-Netzwerk 1 teilnehmen und mit anderen Knoten, wie beispielsweise dem weiteren Fahrzeug 8 und/oder der Ampel 5 nachstehend Car2X-Nachrichten 17 genannte Nachrichten austauschen kann. Dieser Transceiver 16 soll zur Abgrenzung gegenüber dem GNSS-Empfänger 11 nachstehend Car2X-Transceiver 16 genannt werden.

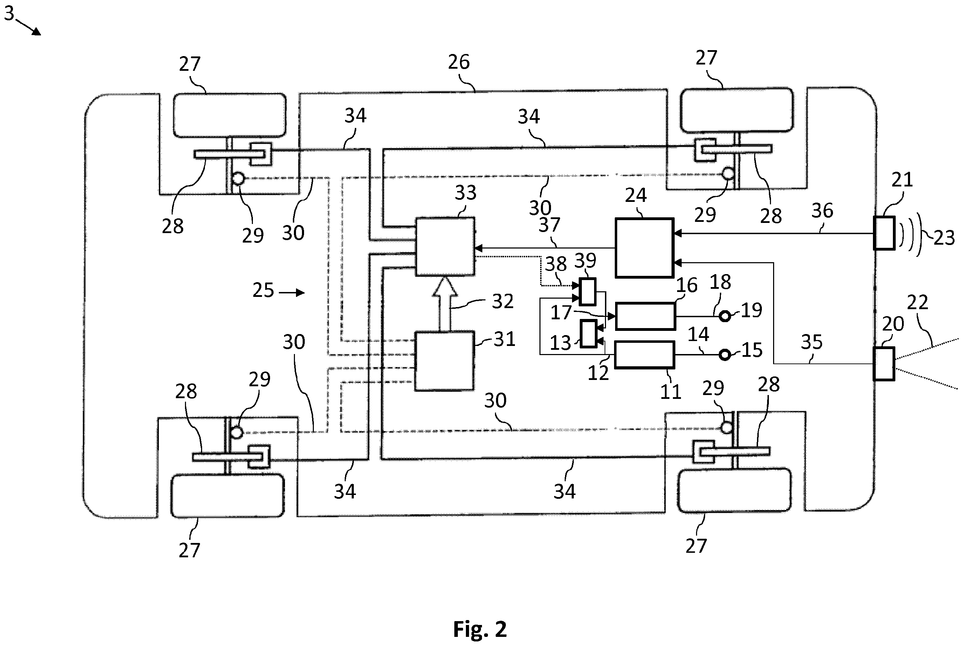

In den über das Car2X-Netzwerk 1 ausgetauschten Car2X-Nachrichten 17, können die einzelnen Knoten 3, 5, 8 untereinander verschiedene Informationen beschreibende Daten austauschen mit denen beispielsweise die Verkehrssicherheit auf der Straße 2 erhöht werden kann. Ein Beispiel für die Informationen, die mit den Daten in den Car2X-Nachrichten 17 ausgetauscht werden können, wäre die über den GNSS-Empfänger 11 bestimmte absolute geographische Lage 12 des jeweiligen Knotens 3, 5, 8 des Car2X-Netzwerkes 1. Derartige Daten können auch als Positionsdaten bezeichnet werden. Ist der die geographische Lage 12 empfangende Knoten 3, 5, 8 des Car2X-Netzwerkes 1 ein Fahrzeug, wie beispielsweise das nicht am Verkehrsunfall 10 beteiligte Fahrzeug 3 und das am Verkehrsunfall 10 beteiligte Fahrzeug 8 dann kann die über das Car2X-Netzwerk 1 empfangene geographische Lage 12 beispielsweise auf dem Navigationssystem 13 des empfangenden Fahrzeuges 3, 8 zur Darstellung beispielsweise der Verkehrsbewegung verwendet werden. Wird neben der absoluten geographischen Lage 12 auch der Verkehrsunfall 10 als Information mit den Daten in der Car2X-Nachricht 17 beschrieben, so können bestimmte Verkehrssituationen, wie beispielsweise der Verkehrsunfall 10 auf Navigationssystem 13 konkreter dargestellt werden. Auf weitere mögliche mit den Car2X-Nachrichten 17 austauschbare Informationen wird später im Rahmen der Fig. 2 näher eingegangen.

Zum Austausch der Car2X-Nachrichten 17 moduliert der Car2X-Transceiver 16 entweder eine Car2X-Nachricht 17 auf ein nachstehend Car2X-Signal 18 genanntes Übertragungssignal und versendet es über eine nachstehend Car2X-Antenne 19 genannte Antenne an die anderen Knoten 3, 5, 8 im Car2X-Netzwerk 1 oder er empfängt über die Car2X-Antenne 19 ein Car2X-Signal 18 und filtert aus diesem die entsprechende Car2X-Nachricht 17 heraus. Darauf wird an späterer Stelle im Rahmen der Fig. 3 näher eingegangen. In Fig. 1 ist dabei dargestellt, dass der Car2X-Transciever 16 eine Car2X-Nachricht 17 an das Navigationssystem 13 unter der Annahme ausgibt, dass diese in der oben beschriebenen Weise Informationen enthält, die auf diesem darstellbar sind. Das ist jedoch nicht einschränkend zu verstehen. Insbesondere kann zweckmäßigerweise auch der GNSS-Empfänger 11 direkt oder, wie in Fig. 2 gezeigt, indirekt mit dem Car2X-Transceiver 16 verbunden sein, um die eigene absolute geographische Lage 12 im Car2X-Netzwerk 1 zu versenden.

Die Struktur der Car2X-Nachricht 17 sowie des Car2X-Signals 18 und damit der Aufbau des Car2X-Netzwerkes können in einem Kommunikationsprotokoll definiert werden. Es gibt bereits derartige Kommunikationsprotokolle länderspezifisch unter anderem im Rahmen der ETSI TC ITS bei ETSI in Europa und im Rahmen der IEEE 1609 bei IEEE sowie bei SAE in den Vereinigten Staaten von Amerika. Weitere Informationen hierzu lassen sich in den genannten Spezifikationen finden.

Das Fahrzeug 3 kann optional noch die oben genannte Umfeldsensorik in Form einer Kamera 20 und eines Radarsensors 21 aufweisen. Mit der Kamera 20 kann das Fahrzeug 3 innerhalb eines Bildwinkels 22 ein Bild einer Ansicht aufnehmen, die in Fahrtrichtung 7 des Fahrzeuges 3 betrachtet vor dem Fahrzeug 3 liegt. Zudem kann das Fahrzeug 3 mit dem Radarsensor 21 und entsprechenden Radarstrahlen 23 in Fahrtrichtung 7 des Fahrzeuges 3 betrachtet Objekte erkennen und in einer an sich bekannten Weise den Abstand zum Fahrzeug 3 bestimmen.

Um die mit einer Car2X-Nachricht 17 übertragbaren Informationen zu konkretisieren, soll nachstehend zunächst auf den Aufbau des Fahrzeuges 3 und des weiteren Fahrzeuges 8 beispielhaft anhand des Fahrzeuges 3 eingegangen werden. Das Fahrzeug 3 besitzt verschiedene Sicherheitskomponenten von denen in Fig. 2 ein elektronischer Bremsassistent 24, EBA 24 genannt, und eine an sich bekannte Fahrdynamikregelung 25 gezeigt ist. Während der DE 10 2004 030 994 A1 Details zum EBA 24 entnommen werden können, können der DE 10 2011 080 789 A1 Details zur Fahrdynamikregelung 25 entnommen werden.

Das Fahrzeug 3 umfasst ein Chassis 26 und vier Räder 27. Jedes Rad 27 kann über eine ortsfest am Chassis 26 befestigte Bremse 28 gegenüber dem Chassis 26 verlangsamt werden, um eine Bewegung des Fahrzeuges 3 auf der Straße 2 zu verlangsamen.

Dabei kann es in einer dem Fachmann bekannten Weise passieren, dass das die Räder 27 des Fahrzeugs 3 ihre Bodenhaftung verlieren und sich das Fahrzeug 3 sogar von einer beispielsweise über ein nicht weiter gezeigtes Lenkrad vorgegebenen Trajektorie durch Untersteuern oder Übersteuern wegbewegt. Dies wird durch die Fahrdynamikregelung 25 vermieden.

In der vorliegenden Ausführung weist das Fahrzeug 4 dafür Drehzahlsensoren 29 an den Rädern 27 auf, die eine Drehzahl 30 der Räder 27 erfassen.

Basierend auf den erfassten Drehzahlen 30 kann ein Regler 31 in einer dem Fachmann bekannten Weise bestimmen, ob das Fahrzeug 3 auf der Fahrbahn rutscht oder sogar von der oben genannten vorgegebenen Trajektorie abweicht und entsprechend mit einem an sich bekannten Reglerausgangssignal 32 darauf reagieren. Das Reglerausgangssignal 32 kann dann von einer Stelleinrichtung 33 verwendet werden, um mittels Stellsignalen 34 Stellglieder, wie die Bremsen 28 anzusteuern, die auf das Rutschen und die Abweichung von der vorgegebenen Trajektorie in an sich bekannter Weise reagieren.

Der EBA 24 kann über die Kamera 20 erfasste Bilddaten 35 und über den Radarsensor 21 erfasste Abstandsdaten 36 zu Objekten wie Fahrzeugen in Fahrtrichtung 7 vor dem Fahrzeug 3 auswerten und basierend darauf eine Gefahrensituation erfassen. Diese könnte beispielsweise gegeben sein, wenn sich ein Objekt vor dem Fahrzeug 3 diesem mit einer zu hohen Geschwindigkeit nähert. In einem solchen Fall könnte der EBA 24 über ein Notbremssignal 37 die Stelleinrichtung 33 einweisen, über die Stellsignale 34 eine Notbremsung mit den Bremsen 28 auszuführen.

Jedes Mal, wenn der EBA 24 oder die Fahrdynamikregelung 25 über die Stelleinrichtung 33 in das Fahrzeug 4 eingreifen, kann beispielsweise die Stelleinrichtung 33 ein in Fig. 2 gepunktet dargestelltes Berichtssignal 38 ausgeben. Zweckmäßigerweise sollte das Berichtssignal 38 konkretisieren, ob der Eingriff durch den EBA 24 oder die Fahrdynamikregelung 25 bedingt war. Ein derartiges Berichtssignal 38 kann von einer beliebigen Instanz im Fahrzeug 3, also beispielsweise auch vom Regler 31 der Fahrdynamikregelung 25 erzeugt werden. Eine Nachrichtenerzeugungseinrichtung 39 könnte dann basierend auf dem Berichtssignal 38, der absoluten geographischen Lage 12 und einem in Fig.3 gezeigten aus einem Zeitgeber 40 ausgegebenen Zeitstempel 41 eine Car2X-Nachricht 17 erzeugen, mit der der Eingriff des EBAs 24 und/oder der Fahrdynamikregelung 25 als Information über das Car2X-Netzwerk 1 den anderen Knoten 5, 8 berichtet werden kann. Die so erzeugte Car2X-Nachricht 17 könnte dann über die Car2X-Antenne 19 im Car2X-Netzwerk 1 versendet werden.

In dem Beispiel der Fig. 1 wurde ausgeführt, dass die in den Car2X-Nachrichten 17 ausgetauschten Information über die absolute geographische Lage 12 der einzelnen Knoten 3, 5, 8 und/oder über Ereignisse wie der Verkehrsunfall 10 und/oder wie ein Eingriff des EBAs 24 und/oder der Fahrdynamikregelung 25 auf dem Navigationssystem 13 zur Orientierung des Fahrers dargestellt werden könnten. Alternativ oder zusätzlich können basierend auf den in den Car2X-Nachrichten 17 ausgetauschten Informationen aber auch aktiv Stellsignale 34 beispielsweise mit der Stelleinrichtung 33 generiert werden. Wird beispielsweise der Eingriff des EBA 24 als Information in einer Car2X-Nachricht 17 übermittelt, könnte beispielsweise basierend auf dem Empfang dieser Car2X-Nachricht 17 automatisch der EBA 24 in dem empfangenden Fahrzeug 3, 8 ausgelöst werden.

Nachstehend soll anhand der Fig. 3 die Übertragung einer Car2X-Nachricht 17 über das Car2X-Netzwerk 1 erläutert werden, das in Fig. 3 der Übersichtlichkeit halber mit einer Wolke angedeutet ist. Als Inhalt der Car2X-Nachricht 17 soll beispielsweise ein durch die Stelleinrichtung 33 mit dem Berichtssignal 38 berichteter Eingriff durch den EBA 24 in das am Verkehrsunfall 10 beteiligte Unfall-Fahrzeug 8 angenommen werden.

Wie bereits erläutert erzeugt die Nachrichtenerzeugungseinrichtung 39 basierend auf dem Berichtssignal 38, der absoluten geographischen Lage 12 und dem Zeitstempel 41 die Car2X-Nachricht 17 gemäß dem oben erwähnten Kommunikationsprotokoll. Die Nachrichtenerzeugungseinrichtung 39 kann dabei prinzipiell auch Teil des Car2X-Transceivers 16 sein.

Aus der Car2X-Nachricht 17 werden in dem Car2X-Transceiver 16 des Unfall-Fahrzeuges 8 in einer Datenpaketerzeugungseinrichtung 42 Datenpaketen 43 erzeugt. Durch das Erzeugen von Datenpaketen 43 können Car2X-Nachrichten 17 aus verschiedenen Anwendungen in dem Unfall-Fahrzeug 8 zu einem einzigen Datenstrom zusammengefasst werden, um das Car2X-Signal 18 zu erzeugen. Die Datenpaketerzeugungseinrichtung 42 entspricht daher einer Netzwerk- und Transportschicht (eng. network and transport layer), deren Aufgabe es bekanntlich ist die Netzwerkdaten aus verschiedenen Anwendungen zu routen. Der Aufbau der Datenpaketerzeugungseinrichtung 42 ist von der oben genannten Spezifikation des Kommunikationsprotokolls für das Car2X-Netzwerk 1 abhängig.

Die generierten Datenpakete 43 werden in einer Modulationseinrichtung 44 auf das Car2X-Signal 18 aufmoduliert und im Car2X-Netzwerk 1 drahtlos versendet. Die Modulationseinrichtung 44 entspricht daher einer Schnittstellenschicht, deren Aufgabe es ist, das Unfall-Fahrzeug 8 physikalisch an das Car2X-Netzwerk 1 anzubinden. Auch der Aufbau der Modulationseinrichtung 44 ist von der oben genannten Spezifikation des Kommunikationsprotokolls für das Car2X-Netzwerk 1 abhängig.

Auf Seiten des nicht am Verkehrsunfall 10 beteiligten Fahrzeuges 3 kann das vom Unfall-Fahrzeug 8 versendete Car2X-Signal 18 dann über die Car2X-Antenne 19 empfangen werden.

Um die Car2X-Nachricht 17 aus dem Car2X-Signal 18 zu extrahieren weist der Car2X-Transceiver 16 des Fahrzeuges 3 eine Demodulationseinrichtung 45 auf, die die senderseitige Modulation der Datenpakete 43 in an sich bekannter Weise rückgängig macht. Entsprechend kann eine Nachrichtenextraktionseinrichtung 46 die Car2X-Nachrichten 17 aus den Datenpaketen 43 extrahieren und den Anwendungen im Fahrzeug 3, wie dem Navigationssystem 13 oder auch der Stelleinrichtung 33 zur Verfügung stellen. Letztendlich stellen die Demodulationseinrichtung 45 und die Nachrichtenextraktionseinrichtung 46 die empfangsseitigen Gegenstücke entsprechend der oben genannten Netzwerk und Transportschicht und der Schnittstellenschicht dar und sind ebenfalls von der oben genannten Spezifikation des Kommunikationsprotokolls für das Car2X-Netzwerk 1 abhängig.

Zu Details der einzelnen Netzwerkschichten wird daher auf die einschlägigen Spezifikationen verwiesen.

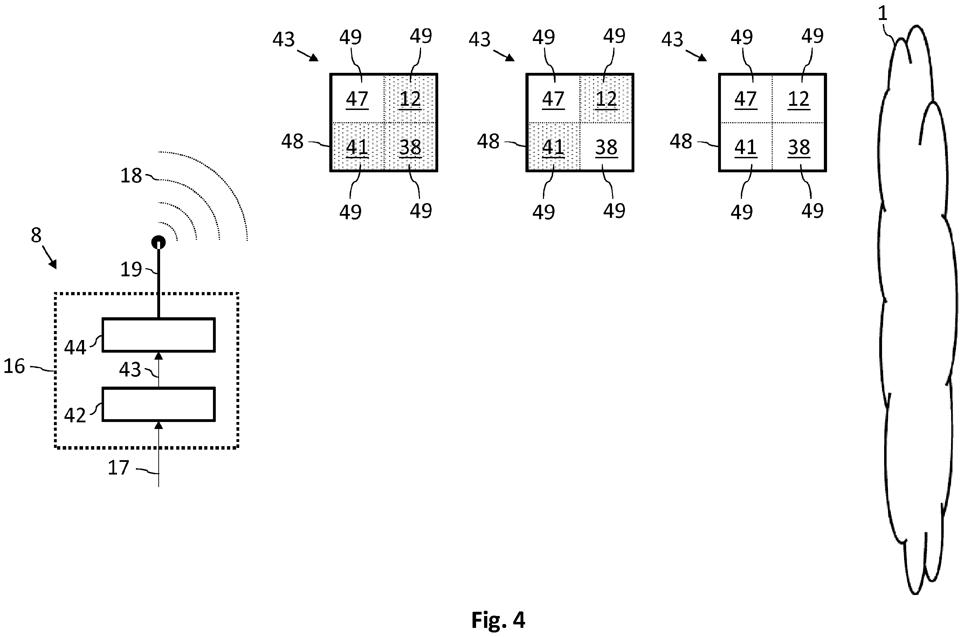

Im Rahmen der vorliegenden Ausführung soll die Erzeugung der Datenpakete 43 in der Datenpaketerzeugungseinrichtung 42 möglichst effizient erfolgen. Um die technische Lösung möglichst effizient durchzuführen, soll nachstehend anhand der Fig. 4 ein mögliches Szenario betrachtet werden, im Rahmen dessen Datenpakete 43 in dem Car2X-Netzwerk 1 versendet werden.

In Fig. 4 sind dazu drei angenommene aufeinanderfolgende Datenpakete 43 dargestellt, die einen bestimmten Typ von Car2X-Nachrichten enthalten sollen und in einem möglichen Szenario auf der Straße 2 in dem Car2X-Netzwerk 1 versendet werden können.

Im Rahmen der ETSI Referenz Architektur für Car2X-Netzwerke wurden bereits verschiedene Typen von Car2X-Nachrichten 17 definiert. Eine dieser Typen sind sogenannte Cooperative Awareness Messages, kurz CAM genannt, und in ETSI EN 302 637-2 (Specification of Cooperative Awareness Basic Service) definiert. Mit einer Car2X-Nachricht 17 in Form einer CAM kann ein Knoten 3, 5, 8 im Car2X-Netzwerk 1 in standardisierter Weise auf sich aufmerksam machen und bestimmte Informationen über seinen Zustand übertragen. Mit einer Car2X-Nachricht 17 in Form einer CAM lassen sich eine Reihe komplexer Informationen zum Fahrzeugzustand austauschen, die aber zum Verständnis des vorliegenden Ausführungsbeispiels nichts beitragen. Zudem ist das Nachrichtenformat definiert, weshalb auf eine ausführliche Erläuterung nachstehend verzichtet werden soll.

Als Abgrenzung zu einer Car2X-Nachricht 17 in Form einer CAM soll als weiteres Beispiel für eine Car2X-Nachricht 17 kurz eine sogenannte Decentralized Environmental Notification Message, kurz DENM genannt werden, mit der ein Knoten 3, 5, 8 in dem Car2X-Netzwerk 1 Informationen zur Infrastruktur, wie beispielsweise den Unfall 10 verteilen könnte. Details zu diesem Nachrichtentyp lassen sich der ETSI EN 302 637-3 (Specification of Decentralized Environmental Notification Basic Service) entnehmen.

Nachstehend soll davon ausgegangen werden, dass das Unfallfahrzeug 8 Car2X-Nachrichten 17 in den in Fig. 4 gezeigten Datenpaketen 43 versendet. Die in den Datenpaketen 43 enthaltenen Car2X-Nachrichten 17 sollen vereinfachte CAM-Nachrichten sein, in denen das Unfallfahrzeug 8 eine sogenannte Fahrzeugidentifikation 47, seine geographische Lage 12, den Zeitstempel 41 zur Kennzeichnung der Aktualität der übertragenen Informationen und Warnungen aussenden kann, mit der das Berichtssignal 38 über den Eingriff der Stelleinrichtung 33 in das Unfallfahrzeug 8 den anderen Knoten 3, 5 des Car2X-Netzwerkes berichtet werden kann.

Im Rahmen der drei in Fig. 4 gezeigten Datenpakete 43 soll angenommen werden, dass das erste Datenpaket 43, in dem keine gepunktete Füllung angedeutet ist, sowie das diesem Datenpaket 43 folgende Datenpaket 43 zu einem Zeitpunkt vor dem Unfall 10 abgesendet werden. Das letzte Datenpaket 43 soll nach dem Unfall 10 ausgesendet werden.

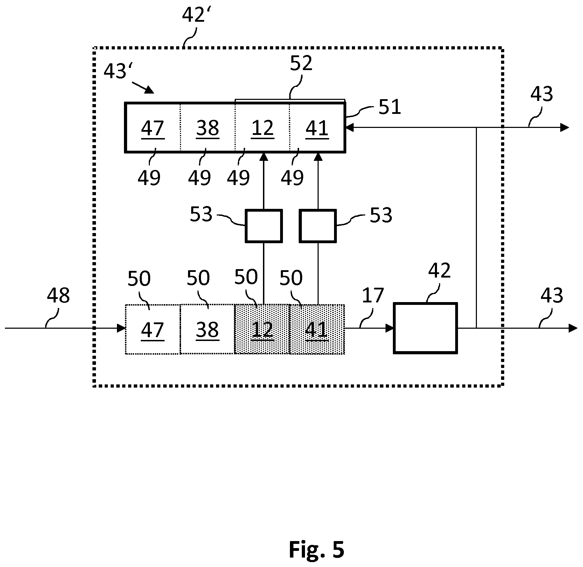

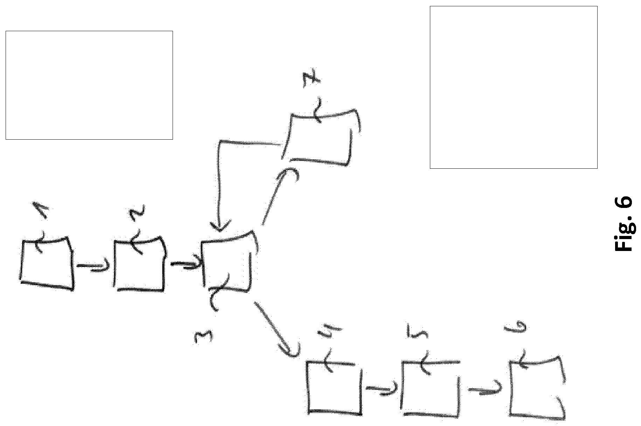

Das Unfallfahrzeug 8 sendet die Datenpakete 43 mit der darin enthaltenen Car2X-Nachricht 17 basierend auf einem in Fig. 5 angedeuteten Triggersignal 48 aus. Das Triggersignal 48 kann dabei die Aussendung der Car2X-Nachrichten 17 beispielsweise in regelmäßigen Abständen initiieren. In den einzelnen Datenpaketen 43 der Fig. 4 sind die mit den darin enthaltenden Car2X-Nachrichten 17 zu übertragenden Informationen als Vierecke dargestellt, wobei jedes Viereck eine Informationsvariable 49 darstellt, mit der eine bestimmte der oben genannten und im Car2X-Netzwerk 1 zu verteilende Informationen qualifiziert werden kann. Jede Informationsvariable kann mit einem Informationswert 12, 38, 41, 47 deklariert werden, um die mit der Car2X-Nachricht 17 zu verteilende Information zu quantifizieren. Die einzelnen Informationswerte 12, 38, 41, 47 sind nicht zwangsläufig Zahlenwerte, sondern können auch Bytes, Strings oder ähnliches sein.

In Fig. 4 sind einige der Informationsvariablen 49 in den Datenpaketen 43 gepunktet dargestellt, was andeuten soll, dass sich ihr Informationswert gegenüber einem unmittelbar zuvor versendeten Datenpaket 43 verändert hat. Was deutlich werden sollte ist, dass sich in einer einen Fahrzeugzustand beschreibenden Car2X-Nachricht 17, wie den oben genannten CAMs, in der Regel nur die Informationswerte ändern, die die Lage des aussendenden Knotens und/oder die Zeit quantifizieren. Im Besten Fall bleiben sogar die die Lage des aussendenden Knotens konstant, wenn beispielsweise eines der Fahrzeug 3, 8 der Fig. 1 an einer der Ampeln 5 der Fig. 1 stehen bleibt. Andere Informationswerte, wie beispielsweise die Fahrzeugidentifikation 47 und/oder das Berichtssignal 38 bleiben in der Regel konstant.

Um ein Datenpaket 43 zu erstellen müssen jedoch getriggert durch das Triggersignal 48 die aktuellen Informationszuständen 50 der einzelnen Informationsquellen, also Sensoren, Speicher, ... zum Deklarieren der Informationsvariablen 49 abgerufen und mit der Datenpaketerzeugungseinrichtung 42 zu dem zu erstellenden Datenpaket 43 zusammengefügt werden. Weil sich jedoch die Fahrzeugidentifikation 47 beispielsweise vergleichsweise selten bis niemals ändert, wird diese bei der Erstellung des Datenpaketes 43 in der Datenpaketerzeugungseinrichtung 42 stets redundant mitverarbeitet und nimmt so entsprechende Rechenressourcen unnötig in Anspruch.

Hier greift das angegebene Ausführungsbeispiel mit dem Vorschlag an, mit der Datenpaketerzeugungseinrichtung 42 nicht stets ein gesamtes Datenpaket 43 neu zu erstellen. Vielmehr soll die Datenpaketerzeugungseinrichtung 42, wie sie in Fig. 3 dargestellt ist, nur dann zum Einsatz kommen, wenn ein neues Datenpaket 43 erstellt werden muss, dass sich gegenüber dem vorher erzeugten Datenpaket 43, vorzugsweise grundlegend, verändert hat. Das kann beispielsweise anhand der Informationswerte bestimmter Informationsvariablen 49 geprüft werden. Ändert sich beispielsweise die Fahrzeugidentifikation 47 so kann von einer grundlegenden Änderung ausgegangen werden, was eine vollständige Neuerstellung eines Datenpaketes 43 mit der Datenpaketerzeugungseinrichtung 42, wie sie in Fig. 3 dargestellt ist, auslöst.

In allen anderen Fällen soll ein Datenpaket 43 basierend auf einem bereits vorhandenen Datenpaket 43 durch eine geeignete vorzugsweise iterative Veränderung des vorhandenen Datenpaketes 43 erstellt werden.

Hierzu wird ein bereits erstelltes Datenpaket 43' in einem Speicher 51 als Referenzdatenpaket hinterlegt. Je nachdem auf welchen Typ von Car2X-Nachrichten 17 das vorliegende Verfahren angewendet werden soll, können auch verschiedene Referenzdatenpakete in dem Speicher 51 hinterlegt werden, wobei dann abhängig von der zu versendenden Car2X-Nachricht 17 ein entsprechendes Referenzdatenpaket bei der Erzeugung eines zu erstellenden Datenpaketes 43 verwendet wird. Wird mit dem Triggersignal 48 die Erstellung eines neuen Datenpaketes 43 mit einer neuen Car2X-Nachricht 17 getriggert, dann können die Informationswerte der einzelnen Informationszustände 50 mit den Informationswerten der Informationsvariablen 49 der als Datenpaket 43' im Speicher 51 hinterlegten Car2X-Nachricht 17 verglichen werden.

In Fig. 4 ändert sich zwischen dem ersten Datenpaket 43, das als Referenzdatenpaket 43' im Speicher 51 hinterlegt sein kann, und dem zweiten Datenpaket 43 nur die Informationsvariable 49 zur Beschreibung der geographischen Lage 12 und die Informationsvariable 49 zur Beschreibung des Zeitstempels 41 (grau hinterlegt). Ein entsprechender Abschnitt 52 mit den Informationsvariablen 49 im Speicher 51 kann dann basierend auf den verfügbaren Informationszuständen 50 der entsprechenden Informationsquellen aktualisiert werden. Bei der Aktualisierung werden dann die Informationswerte für die Informationsvariablen 49 den Informationszuständen 50 der entsprechenden Informationsquellen für die Informationswerte entnommen. Die Informationsquelle für die geographische Lage 12 ist der GNSS-Empfänger 11 während die Informationsquelle für den Zeitstempel 41 der Zeitgeber 40 ist. Dabei können die Informationswerte vor dem hinterlegen gemäß vorbestimmter Vorschriften 53 standardisiert werden, damit sie von allen Knoten 3, 5 im Car2X-Netzwerk 1 auch verstanden werden.

Demgegenüber kann festgelegt werden, dass beispielsweise eine Änderung der das Berichtssignal 38 beschreibenden Informationsvariable 49 eine Neukodierung auslöst. Entsprechend würde das dritte Datenpaket 43 in Fig. 4 vollständig neu kodiert, weil hier eine Änderung im Berichtssignal 38 auftreten könnte, um beispielsweise einen Eingriff des EBA 24 und/oder der Fahrdynamikregelung 25 zu melden, die beispielsweise kurz vor dem Unfall 10 reagiert haben könnten.

Mit dem Einführen einer vorbestimmten Bedingung für eine vollständige Neuerstellung eines Datenpaketes 43, hier die Änderung der Informationswerte für bestimmte Informationsvariablen 49, wird berücksichtigt, dass das Auffinden allzu signifikanter Änderung eines Datenpaketes 43 gegenüber dem im Speicher 51 hinterlegten Referenzdatenpaket 43' ebenfalls rechenressourcenintensiv ist, was die rechenressourceneinsparende Wirkung des angegebenen Verfahrens schwächen würde.

Der Speicher 51 und die Nachrichtenerzeugungseinrichtung 42 sind in Fig. 5 der Übersichtlichkeit halber zu einer übergeordneten Nachrichtenerzeugungseinrichtung 42' zusammengefasst.

## Patentansprüche

1. Verfahren zum Erzeugen eines in einem Fahrzeug-Ad-hoc-Netzwerk (1) zu übertragenen Datenpaketes (43) mit einer in dem Fahrzeug-Ad-hoc-Netzwerk (1) zu übertragenen Nachricht (17), umfassend:
- Abrufen eines vorhandenen Datenpaketes (43') mit einer bereits im vorhandenen Datenpaket (43') gepackten Nachricht,
- Bestimmen eines Abschnittes (52) in dem vorhandenen Datenpaket (43'), an dem sich die bereits gepackte Nachricht und die zu übertragende Nachricht (17) voneinander unterscheiden, und
- Austauschen des bestimmten Abschnittes (56) in dem vorhandenen Datenpaket (43'), um die bereits gepackte Nachricht in die zu übertragende Nachricht (17) zu wandeln und das zu übertragende Datenpaket (43) zu erzeugen, **dadurch gekennzeichnet, dass** der bestimmte Abschnitt (52) in dem vorhandenen Datenpaket (43') nur ausgetauscht wird, wenn der vorbestimmte Abschnitt (52) eine vorbestimmte Bedingung erfüllt, und Packen der gesamten zu übertragenden Nachricht (17) zum zu übertragenden Datenpaket (43), wenn der vorbestimmte Abschnitt (52) die vorbestimmte Bedingung nicht erfüllt.

2. Verfahren nach Anspruch 1, wobei die gepackte Nachricht und die zu übertragende Nachricht (17) zur Qualifizierung von Informationen Informationsvariablen (49) enthalten, die im Datenpaket (43, 43') in einer vorbestimmten Struktur angeordnet sind und die die Informationen mit Informationswerten (10, 12, 41, 49) qualifizieren.

3. Verfahren nach Anspruch 2, wobei der auszutauschende Abschnitt (52) in dem vorhandenen Datenpaket (43') Informationsvariablen (49) umfasst, an denen sich die Informationswerte (12, 41) der zu übertragenden Nachricht (17) von den Informationswerten (12, 41) der bereits gepackten Nachricht unterscheiden.

4. Verfahren nach Anspruch 3, umfassend:
- Austauschen des bestimmten Abschnittes (52) in dem vorhandenen Datenpaket (43') basierend auf den Informationswerten (12, 41) der zu übertragenden Nachricht (17) für die Informationsvariablen (49) in dem auszutauschenden Abschnitt (52) .

5. Verfahren nach Anspruch 4, wobei zum Austauschen des bestimmten Abschnittes (52) in dem vorhandenen Datenpaket (43') die Informationswerte (12, 41) der zu übertragenden Nachricht (17) für die Informationsvariablen (49) in dem auszutauschenden Abschnitt (52) basierend auf einer vorbestimmten Vorschrift (53) gewandelt, insbesondere kodiert werden.

6. Verfahren nach Anspruch 1, wobei die vorbestimmte Bedingung von der mit der Informationsvariablen (49) qualifizierten Information abhängig ist.

7. Vorrichtung (42') zur Durchführung eines Verfahrens nach einem der vorstehenden Ansprüche.

8. Sender (16) für ein Fahrzeug (3) zum Senden eines Übertragungssignals (18), das eingerichtet ist, Nachrichten (17) mit Positionsdaten (12) zu Teilnehmern (3, 5, 8, 52) eines Fahrzeug-Ad-Hoc-Netzwerkes (1) in Datenpaketen (43) zu tragen, umfassend:
- eine Vorrichtung (42') nach Anspruch 7 zum Erzeugen wenigstens eines Datenpaketes (43) aus einer zu versendenden Nachricht (17),
- eine Übertragungseinrichtung (44) zum Versenden des Datenpaketes (43) in dem Übertragungssignal (18) über eine Antenne (19).

## Claims

1. A method of generating a data packet (43) to be transmitted in a vehicular ad-hoc network (1) with a message (17) to be transmitted in a vehicular ad-hoc network (1), the method comprising:
- retrieving an existing data packet (43') with a message that is already packed in the existing data packet (43'),
- determining a section (52) in the existing data packet (43') where the message that is already packed differs from the message (17) to be transmitted, and
- replacing the determined section (56) in the existing data packet (43') in order to transform the message that is already packed into the message (17) to be transmitted and generate the data packet (43) to be transmitted, **characterized in that** the determined section (52) in the existing data packet (43') is replaced only if the predetermined section (52) satisfies a predetermined condition, and packing the entire message (17) to be transmitted into the data packet (43) to be transmitted if the predetermined section (52) does not satisfy the predetermined condition.

2. The method of Claim 1, wherein the packed message and the message (17) to be transmitted include information variables (49) for qualifying the information, which information variables (49) are arranged in a predetermined structure in the data packet (43, 43') and are used for qualifying the information using information values (10, 12, 41, 49).

3. The method of Claim 2, wherein the section (52) to be replaced in the existing data packet (43') comprises information variables (49) in which the information values (12, 41) of the message (17) to be transmitted differ from the information values (12, 41) of the message that is already packed.

4. The method of Claim 3, comprising:
- replacing the determined section (52) in the existing data packet (43') based on the information values (12, 41) of the message (17) to be transmitted for the information variables (49) in the section (52) to be replaced.

5. The method of Claim 4, wherein, for replacing the determined section (52) in the existing data packet (43'), the information values (12, 41) of the message (17) to be transmitted for the information variables (49) in the section (52) to be replaced are transformed, in particular encoded, based on a predetermined instruction (53).

6. The method of Claim 1, wherein the predetermined condition depends on the information qualified with the information variable (49) .

7. A device (42') for performing a method according to any one of the preceding claims.

8. A transmitter (16) for a vehicle (3) for sending a transmission signal (18) adapted to carry messages (17) with position data (12) within data packets (43) to participants (3, 5, 8, 52) of a vehicular ad-hoc network (1), the transmitter comprising:
- a device (42') according to Claim 7 for generating at least one data packet (43) from a message (17) to be sent,
- a transmission apparatus (44) for sending the data packet (43) in the transmission signal (18) via an antenna (19).

## Revendications

1. Procédé destiné à générer un paquet de données à transmettre (43) dans un réseau ad hoc de véhicules (1) comprenant un message à transmettre (17) dans le réseau ad hoc de véhicules (1), comprenant :
- l'appel d'un paquet de données existant (43') comprenant un message déjà empaqueté dans le paquet de données existant (43'),
- la détermination d'un segment (52) dans le paquet de données existant (43'), par lequel le message déjà empaqueté et le message à transmettre (17) diffèrent l'un de l'autre, et
- l'échange du segment (56) déterminé dans le paquet de données existant (43'), pour transformer le message déjà empaqueté en message à transmettre (17) et pour générer le paquet de données à transmettre (43), **caractérisé en ce que** le segment (52) déterminé dans le paquet de données existant (43') n'est échangé que si le segment (52) prédéterminé remplit une condition prédéterminée, et l'empaquetage de la totalité du message à transmettre (17) pour obtenir le paquet de données à transmettre (43) si le segment (52) prédéterminé ne remplit pas la condition prédéterminée.

2. Procédé selon la revendication 1, dans lequel le message empaqueté et le message à transmettre (17) contiennent des variables d'information (49) pour la qualification d'informations, lesdites variables d'information étant agencées dans le paquet de données (43, 43') en une structure prédéterminée et qualifiant les informations avec des valeurs d'information (10, 12, 41, 49).

3. Procédé selon la revendication 2, dans lequel le segment (52) à échanger dans le paquet existant (43') comprend des variables d'information (49), par lesquelles les valeurs d'information (12, 41) du message à transmettre (17) diffèrent des valeurs d'information (12, 41) du message déjà empaqueté.

4. Procédé selon la revendication 3, comprenant :
- l'échange du segment (52) déterminé dans le paquet de données existant (43') sur la base des valeurs d'information (12, 41) du message à transmettre (17) pour les variables d'information (49) dans le segment (52) à échanger.

5. Procédé selon la revendication 4, dans lequel, pour l'échange du segment (52) déterminé dans le paquet de données existant (43'), les valeurs d'information (12, 41) du message à transmettre (17) pour les variables d'information (49) dans le segment (52) à échanger sont transformées, en particulier codées, sur la base d'une prescription (53) prédéterminée.

6. Procédé selon la revendication 1, dans lequel la condition prédéterminée dépend de l'information qualifiée au moyen des variables d'information (49).

7. Dispositif (42') destiné à exécuter un procédé selon l'une quelconque des revendications précédentes.

8. Émetteur (16) pour un véhicule (3) destiné à émettre un signal de transmission (18), qui est conçu pour envoyer des messages (17) avec des données de position (12) à des participants (3, 5, 8, 52) d'un réseau ad hoc de véhicules (1) dans des paquets de données (43), comprenant :
- un dispositif (42') selon la revendication 7 destiné à générer au moins un paquet de données (43) à partir d'un message (17) à envoyer,
- un dispositif de transmission (44) destiné à envoyer le paquet de données (43) dans le signal de transmission (18) par le biais d'une antenne (19).
